**Europäisches Patentamt**

**European Patent Office**

**Office européen des brevets**

(19)

(11) Veröffentlichungsnummer: **0 150 757**
**B1**

(12) ## EUROPÄISCHE PATENTSCHRIFT

(45) Veröffentlichungstag der Patentschrift:
**27.12.89**

(21) Anmeldenummer: **85100358.2**

(22) Anmeldetag: **15.01.85**

(51) Int. Cl.⁴: **G 01 L 1/08,** E 21 B 49/00,
E 21 B 47/06, E 02 D 1/00

(54) **Vorrichtung zur Bestimmung eines Spannungszustandes.**

(30) Priorität: **02.02.84 DE 3403521**

(43) Veröffentlichungstag der Anmeldung:
**07.08.85 Patentblatt 85/32**

(45) Bekanntmachung des Hinweises auf die Patenterteilung:
**27.12.89 Patentblatt 89/52**

(84) Benannte Vertragsstaaten:
**AT CH FR GB LI**

(56) Entgegenhaltungen:
**DE-A-1 648 468**
**FR-A-2 343 252**
**US-A-2 927 459**

(73) Patentinhaber: **GESELLSCHAFT FÜR STRAHLEN-
UND UMWELTFORSCHUNG M.B.H., Ingolstädter
Landstrasse 1 Post Oberschleissheim, D-8042
Neuherberg (DE)**

(72) Erfinder: **Kessels, Winfried. Dr., Wolfenbütteler
Strasse 77, D-3300 Braunschweig (DE)**
Erfinder: **Flentge, Ingo., Wolfenbütteler Strasse 22,
D-3307 Schöppenstedt (DE)**
Erfinder: **Kolditz, Helmut., Ernst- Moritz- Arndt-
Strasse 20, D-3340 Wolfenbüttel (DE)**

(74) Vertreter: **Gottlob, Peter, Kernforschungszentrum
Karlsruhe GmbH Stabs. Patente und Lizenzen
Weberstrasse 5, D-7500 Karlsruhe 1 (DE)**

EP 0 150 757 B1

## Beschreibung

Die Erfindung betrifft eine Vorrichtung zur Bestimmung eines Spannungszustandes geschlossener Formationen mittels einer Druckmessung.

Die Kenntnis des mechanischen Zustandes z.B. eines Gebirges, insbesondere seines Spannungszustandes, ist für die Belange des Berg- und Tunnelbaues sowie für die Bodenmechanik von besonderer Bedeutung. Über die Möglichkeit seiner in situ-Bestimmung wird daher in diversen Veröffentlichungen ausführlich berichtet (W.Dreyer, 1974, Ferdinand Enke Verlag, Stuttgart).

Zum Problem der weitgehend isothermen Beanspruchung des Gebirges im Berg- und Tunnelbau sowie in der Bodenmechanik erlangte insbesondere im Rahmen der Endlagerung hochradioaktiver Stoffe die thermomechanische Belastung des Gebirges eine besondere Bedeutung (Albers und Ehlert, 1982, ISRM Symposium, Aachen). Für die insitu-Spannungsermittlung ergeben sich im aufgeheizten Gebiet des Gebirges besondere Probleme, da die Messungen in einem relativ schnell zeitlich veränderlichen Temperatur- und Spannungsfeld durchgeführt werden müssen (bis 200°C). Trotz dieser relativ schnellen zeitlichen Änderungen wird von allen Meßverfahren eine hohe Nullpunktkonstanz verlangt. Vorausgesetzt wird dabei, daß nicht nur sehr kurzfristige Spannungsänderungen des thermisch induzierten Spannungsfeldes von Interesse sind, sondern daß auch der Absolutwert der Spannung ermittelt werden soll.

Besondere Probleme ergeben sich insbesondere bei den hohen Temperaturen bei allen Meßverfahren, die Druck-bzw. Kraftmessungen an Materialien mit bekannten elastischen Parametern durch DMS-Applikation vornehmen. Hier zeigt sich, daß selbst bei ausgesucht thermisch stabilen DMS eine große zeitliche Korrektur des Nullpunktdrifts angebracht werden muß. Unabhängig von diesem Kriechen des DMS auf dem Druckstempel ist für das Gesamtsystem eine genaue Eichung der Temperaturabhängigkeit vorzunehmen. Dies gilt in gleicher Weise für die Durchführung von Messungen nach dem Prinzip einer schwingenden Saite und auch bei Messungen, die z.B. mit Glötzl-Dosen geführt werden geht eine zeitlich veränderliche Temperatur in die Messung ein. Ursache hierfür ist der unterschiedliche thermische Ausdehnungkoeffizient zwischen dem Gebirge und den Teilen der Glötzlzelle. Hier wirkt sich aus, daß der Druck nicht direkt, sondern indirekt über die Volumenkonstanthaltung einer bestimmten (z.B. Quecksilber) Menge erfolgt. Spannungsmessungen, die mit Flat Jacks durchgeführt werden (Hoskins, 1966, Inst. J.Rock Mech.Min. Sci., Vol. 3, Pergamon Press) eignen sich nur für den stoßnahen Bereich des Gebirges. Bei den in den letzten Jahren insbesondere in Tiefbohrungen durchgeführten Hydraulic-Facturing-Messungen besteht ein besonderes Problem in der Erkennung der Frac-Orientierung und darin, daß zur Ermittlung des gesamten Spannungstensors bekanntlich sechs voneinander linear unabhängige Frac-Orientierungen erzeugt werden müssen. Neben diesen Problemen wird der Einsatz zur Erfassung schnell veränderlicher Spannungsfelder unpraktikabel, da eine Dauerregistrierung der Spannung kaum möglich ist.

Das Überbohrverfahren (G.Herget, Inst. J.Rock Mech. Min. Sci and Geomech. Abstract, Vol. 10, Pergamon Press, 1973) läßt nur zeitlich sehr stark diskontinuierliche Spannungsmessungen zu. Der Hauptnachteil dieses Verfahrens ist aber, daß zur Umrechnung der beim Überbohren auftretenden Verformungen in Spannungen die elastischen Parameter des in situ anstehenden Gebirges bekannt sein müssen.

Ihre besondere Bedeutung haben die beiden letztgenannten Meßverfahren in der Anwendung zur Absolutspannungsbestimmung im kriechfähigen oder nicht kriechfähigen (z.B. Granit) Gebirge.

Die der Erfindung gestellte Aufgabe besteht darin, eine Vorrichtung der eingangs genannten Art derart auszubilden, daß mit ihr Absolutspannungsmessungen auch bei hohen Temperaturen und rasch veränderlichen Spannungszuständen durchgeführt werden können.

Die Lösung ist in den kennzeichnenden Merkmalen des Anspruches 1 beschrieben.

Die übrigen Ansprüche geben vorteilhafte Weiterbildungen bzw. Ausführungsformen der Erfindung wieder.

Das erfindungsgemäße Druckkissen arbeitet demnach nach einem Kompensationsverfahren mit einer direkten Druckmessung, d.h. in die Messung gehen keinerlei Materialparameter ein, so daß am Druckkissen auch bei stark variabler Temperatur (wie anhand von Messungen gezeigt wird) keine Eichung vorgenommen werden muß. Gemessen wird der Zeitpunkt des Abhebens zweier dünner Bleche voneinander, wenn zwischen diesen Blechen der außen anliegende Druck erreicht ist. Als Indikator für dieses Abheben wird die Änderung des elektrischen Widerstandes zwischen beiden Blechen gemessen.

Ein ähnliches Verfahren wurde zwar von Natau (2.Kongress der Internationalen Gesellschaft für Felsmechanik, Belgrad, 1970, Bd.4) vorgeschlagen und erprobt. Er verwandte allerdings nicht den elektrischen Widerstand sondern einen aufgeklebten DMS als Signalgeber.

Die Ermittlung des Abhebesignals durch eine Widerstandsmessung läßt es zu, daß trotz der relativ dünnen Blechdicken das Kissen sehr robust ist. Auch ist die Messung wenig störanfällig, da der Stahl des Druckkissens selbst für angefeuchteten Salzgruß ein so guter Leiter ist, daß sich der Widerstandssprung deutlich abzeichnet. Ein weiterer Vorteil des Druckkissens ist, daß das Kissen mit seiner Gesamtdicke von nur ca. 0,5 mm bei einem zeitlich veränderlichen Spannungsfeld aufgrund des unterschiedlichen Kompressionsmoduls zwischen Kissenmaterial und Gebirge kein nennenswertes Eigenspannungsfeld in der direkten Umgebung des Kissens erzeugt, wie dies bei relativ dicken Kissen oder Druckmeßdosen möglich ist.

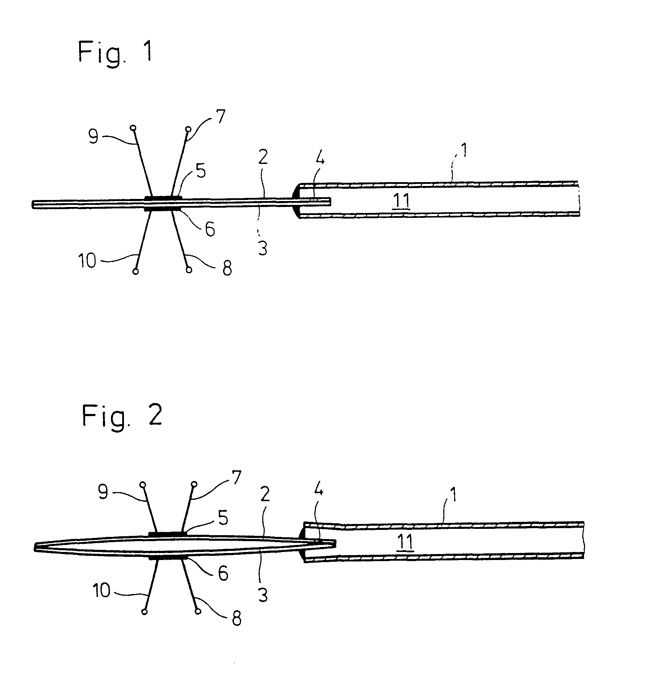

Im folgenden wird die Erfindung anhand eines Ausführungsbeispiels mittels der Figuren 1 - 4 näher erläutert.

Das Druckkissen ist in seinem Aufbau in den Fig. 1 - 2 im Schnitt dargestellt. Es besteht aus einem Rohr 1 das zur Zuführung einer Flüssigkeit oder eines Gases, insbesondere von z.B. Hydrauliköl 11 dient, und zwei dünnen Blechen 2 und 3 mit einem für Metalle hohen spezifischen elektrischen Widerstand (Chrom-Nickel, VA-Stahl), die beide miteinander an den Rändern druckdicht verbunden, z.B. verlötet, sind. Über das Rohr 1 und eine Bohrung 4 im oberen Blech 2 kann Hydrauliköl 11 zwischen beide Bleche 2 und 3 gepumpt werden. In der Mitte beider Bleche 2 und 3 von z.B. rechteckiger Form (oder Kreisscheiben) sind elektrische Kontaktstellen 5 und 6 als Stromzuführung und Spannungsabgriff angebracht bzw. aufgelötet.

Mit dem Druckkissen wird die auf die Kissenoberfläche (äußere Oberfläche der beiden Bleche 2 und 3) wirkende Normalkomponente des Spannungsvektors $S_n$

$$S_n = (\sigma \cdot n) \cdot n$$

$\sigma$ = Spannungstensor
$n$ = Flächennormalvektor

bestimmt (im hydraulischen Zustand entspricht dies dem Druck). Entsprechend wird von außen anliegendem Druck Pa gesprochen. Ziel einer Messung ist es nun, diesen Druck Pa zu bestimmen. Es besteht die Möglichkeit, mit 6 linear unabhängig angeordneten Kissen den Spannungstensor zu bestimmen.

Das Meßprinzip wird aus dem zeitlichen Ablauf einer Messung deutlich.

1. Zu Beginn der Messung (Fig. 1) bleibt das in das Gebirge eingebaute Druckkissen durch den außen anliegenden Druck Pa zusammengedrückt. Durch die Kontakte 7 und 8 wird ein Gleichstrom geschickt. Dieser erzeugt einen Spannungsabfall, der über den Spannungsabgriff 9 und 10 gemessen wird.

Der zwischen den Spannungsabgriff 9, 10 vorhandene elektrische Widerstand wird im wesentlichen durch die Dicken der Chromnickelbleche 2 und 3 bestimmt. Der Widerstand der Kontaktstellen 5, 6 bzw. Lötstellen ist zu vernachlässigen. Der Strom fließt, entsprechend dem kürzesten Weg von 7 nach 8 und nicht über die Lötstellen, mit denen die beiden Bleche 2 und 3 am Rand verlötet sind.

2. Nun wird der Öldruck Pi im Hydraulikrohr 1 erhöht. Solange dieser Öldruck Pi kleiner als der außen anliegende Druck Pa ist, bleibt der Übergangswiderstand im Idealfall konstant. Bei einem Überschreiten des außen anliegenden Druckes Pa wird sich dann der Übergangswiderstand sprunghaft erhöhen, da dann beide Bleche 2 und 3 voneinander getrennt werden (Fig. 2) und der Strom einen großen Weg im relativ schlecht leitfähigen Chromnickelstahl über die Randlötstellen zurückzulegen hat. Der gemessene Druck Pi zum Zeitpunkt des Sprunges im Widerstand entspricht dem am Druckkissen außen anliegende Druck Pa.

Da nur der Widerstandssprung ausgewertet wird und die Materialparameter sowohl des Druckkissens als auch des umgebenden Materials nur einen Einfluß auf die Höhe des Sprunges haben, ist die auswertbare Messung eine Absolutmessung.

Daß auch ungünstige Bedingungen im umgebenden Gebirge keine Auswirkung auf die Auswertbarkeit einer Messung haben, wurde experimentell überprüft, indem das Druckkissen in einem stark angefeuchteten Salz eingesetzt wurde. Im Vergleich zu Messungen im trockenen Salz konnte eine markante Änderung der Höhe des Widerstandssprunges nicht festgestellt werden. Dies ist leicht dadurch zu erklären, daß der Widerstand des Chromnickelstahles immer noch wesentlich kleiner als der Widerstand einer Salzlauge ist. D.h. auch das mit Salzlauge gesättigte Salz ist für das Druckkissen noch als Isolator anzusehen.

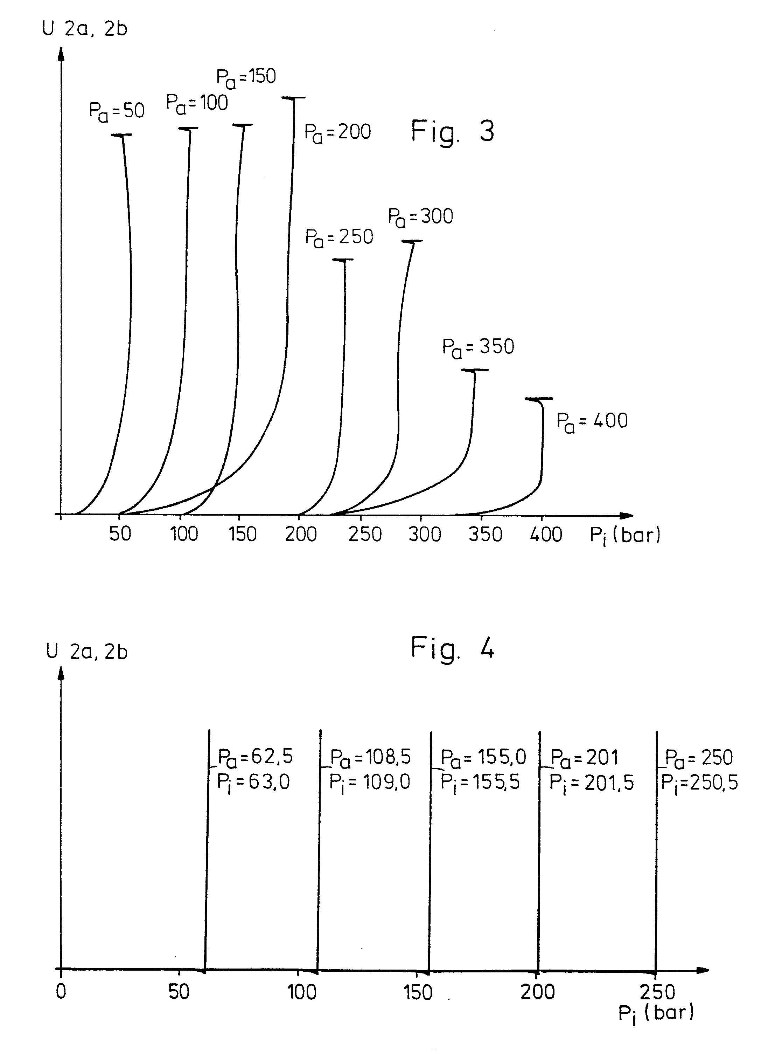

Das erfindungsgemäße Druckkissen wurde unter einer einaxialen Presse erprobt. Hierzu wurde ein Rohr mit Salzgruß gefüllt und in das Rohr das beschriebene Druckkissen eingebaut. Die Rohrwandung wurde stark mit Öl benetzt, damit die Messung nicht durch Reibungseffekt zwischen Salzgruß und Rohrwandung verfälscht wurde. Der Salzgruß wurde mit einer Kraft belastet, von der aus dann auf den Druck Pa in Fig. 3 umgerechnet wurde. Der Spannungsabfall U zwischen den Kontakten 9 und 10 ist in Fig. 3 auf der Ordinate eingetragen. Die Messungen wurden mit einem XY-Schreiber durchgeführt. Die Meßergebnisse von 0 bis 400 bar sind dort aufgezeichnet und geben einen Eindruck über die Meßgenauigkeit des Druckkissens. Ungünstige Voraussetzungen durch Reibungseffekte und nicht exakt homogenen Salzgrußes bleiben unberücksichtigt.

Die folgende Tabelle gibt die entsprechenden Werte und ihre Differenz wieder.

| eingestellte Druck (bar) | Messung (bar) | Abweichung (bar) |
|---|---|---|
| 50 | 60 | 10 |
| 100 | 105 | 5 |
| 150 | 150 | 0 |
| 200 | 195 | -5 |
| 250 | 240 | -10 |
| 300 | 295 | -5 |
| 400 | 402 | -2 |

Man erhält für diesen Druckbereich, der einem mittleren Druck von 207 bar entspricht, eine Standardabweichung von 6,3 bar. Dies entspricht einem relativen Fehler von 3,0 %. Dieser Fehler ist durch weitere Experimente und hieraus folgende Verbesserungen noch zu reduzieren. Dies gilt insbesondere für die Randbedingungen, die durch den Pressenversuch gegeben sind bzw. für seine Störungen.

Der Meßfehler, den das Druckkissen allein hervorruft, wurde durch eine Messung im Hochdruckautoklaven demonstriert. Der Fehler lag hier in der Ablesegenauigkeit der Meßgeräte bei 0,5 bar. Dies entspricht einem relativen Fehler von 0,3 % bei 150 bar. Die Aufzeichnung der Messungen (Spannung U an den Kontakten 9, 10 gegen Pi für verschiedene Pa) ist in Fig. 4 dargestellt.

## Patentansprüche:

1. Vorrichtung zur Bestimmung eines Spannungszustandes geschlossener Formationen mittels einer Druckmessung, bei der

a) ein Druckkissen mit zwei an ihren Seitenrändern miteinander dicht zusammengefügten Seitenwänden (2, 3) vorgesehen ist, deren Abstand zueinander veränderbar ist,

b) ein Medium (11) mit bekanntem Druck (Pi) zwischen die beiden Seitenwände (2, 3) einpreßbar ist, und

c) der elektrische Widerstandswert zwischen je einer Kontaktstelle (9, 10) auf einer der beiden Seitenwände (2, 3) fortlaufend registrierbar ist.

2. Vorrichtung nach Anspruch 1, dadurch gekennzeichnet, daß die zwei Seitenwände (2, 3) durch Verlöten an ihren Seitenrändern miteinander dicht zusammengefügt sind und daß das Medium (11) über eine Rohrleitung (1) in den Raum zwischen den beiden Seitenwänden (2, 3) herangeführt ist.

3. Vorrichtung zur Bestimmung eines Spannungszustandes nach Anspruch 1 und 2, dadurch gekennzeichnet, daß die beiden Seitenwände (2, 3) aus zwei Blechen von rechteckiger Form oder Kreisscheiben bestehen.

4. Vorrichtung zur Bestimmung eines Spannungszustandes nach Anspruch 1 oder einem der folgenden, dadurch gekennzeichnet, daß das Medium (11) eine Flüssigkeit oder ein Gas ist.

5. Vorrichtung zur Bestimmung eines Spannungszustandes nach Anspruch 1 oder einem der folgenden, dadurch gekennzeichnet, daß die Seitenwände (2, 3) zumindest im Bereich der beiden Kontaktstellen (5, 6) aus elektrisch leitfähigem Material bestehen.

6. Vorrichtung zur Bestimmung eines Spannungszustandes nach Anspruch 1 oder einem der folgenden, gekennzeichnet durch die Verwendung zur in-situ-Absolutspannungsbestimmung in kriechfähigem oder nicht kriechfähigem Material, insbesondere im Gebirge oder in Salzformationen unter wechselnden Spannungs- und Temperaturzuständen.

## Claims

1. Device for determining state of strain in closed formations by pressure measuring means, wherein

a) a pressure pad is provided, having two lateral walls (2, 3) which are tightly joined together at their lateral edges, the spacing between said walls being variable;

b) a medium (11) is compressible at known pressure (Pi) between the two lateral walls (2, 3); and

c) the electrical resistance value between each respective point of contact (9, 10) on one of the two lateral walls (2, 3) is continuously recordable.

2. Device according to claim 1, characterised in that the two lateral walls (2, 3) are tightly joined together at their lateral edges by means of soldering, and in that the medium (11) is conducted into the space between the two lateral walls (2, 3) via a pipe (1).

3. Device for determining state of strain according to claims 1 and 2, characterised in that the two lateral walls (2, 3) are formed from two plates of rectangular form or circular discs.

4. Device for determining state of strain according to claim 1 or one of the subsequent claims, characterised in that the medium (11) is a liquid or a gas.

5. Device for determining state of strain according to claim 1 or one of the subsequent claims, characterised in that the lateral walls (2, 3), at least in the region of the two points of contact (5, 6), are formed from electrically conductive material.

6. Device for determining state of strain according to claim 1 or one of the subsequent claims, characterised by its being used for determining the absolute in-situ strain in creepable or noncreepable material, more especially in the rock or in salt formations with changing states of strain and temperature.

## Revendications

1. Dispositif pour la détermination d'un état de contrainte de formations fermées, au moyen d'une mesure de pression, dans lequel

a) on dispose un coussin de pression comportant deux parois latérales (2, 3) étroitement jointes l'une à l'autre au niveau de leurs bords latéraux, dont l'écartement l'une par rapport à l'autre peut être modifié,

b) un milieu (11) à pression connue (Pi) peut être injecté entre les deux parois latérales (2, 3) et

c) la valeur de la résistance électrique entre des points de contact (9, 10), placés chacun sur une des deux parois latérales (2, 3), peut être enregistrée en continu.

2. Dispositif selon la revendication 1, caractérisé en ce que les deux parois latérales (2, 3) sont jointes étroitement l'une à l'autre par brasage sur leurs bords latéraux, et en ce que le milieu (11) est introduit par un conduit (1) dans l'espace entre les deux parois latérales (2, 3).

3. Dispositif pour la détermination d'un état de contrainte selon les revendications 1 et 2, caractérisé en ce que les deux parois latérales (2, 3) sont constituées de deux plaques de forme rectangulaire ou de disques circulaires.

4. Dispositif pour la détermination d'un état de contrainte, selon la revendication 1 ou l'une quelconque des suivantes, caractérisé en ce que le milieu (11) est un liquide ou un gaz.

5. Dispositif pour la détermination d'un état de contrainte selon la revendication 1 ou l'une quelconque des suivantes, caractérisé en ce que les parois latérales (2, 3) sont constituées, au moins dans la zone des deux points de contact (5, 6), d'un matériau conducteur de l'électricité.

6. Dispositif pour la détermination d'un état de contrainte selon la revendication 1 ou l'une quelconque des suivantes, caractérisé par l'utilisation, pour la détermination in situ de contraintes absolues dans un matériau déformable ou non déformable, en particulier dans un terrain ou dans des formations salines, à conditions variables de contrainte et de température.

Fig. 1

Fig. 2

U 2a, 2b

$P_a = 50$    $P_a = 100$    $P_a = 150$

$P_a = 200$    Fig. 3

$P_a = 250$    $P_a = 300$

$P_a = 350$

$P_a = 400$

50   100   150   200   250   300   350   400    $P_i$ (bar)

U 2a, 2b    Fig. 4

$P_a = 62,5$
$P_i = 63,0$

$P_a = 108,5$
$P_i = 109,0$

$P_a = 155,0$
$P_i = 155,5$

$P_a = 201$
$P_i = 201,5$

$P_a = 250$
$P_i = 250,5$

0   50   100   150   200   250

$P_i$ (bar)